# FASCICULE DE BREVET EUROPEEN

(11) **EP 0 441 704 B1**
(45) Date de publication et mention de la délivrance du brevet: **15.12.1993**
(21) Numéro de dépôt: 91400285.2
(22) Date de dépôt: 06.02.1991
(51) Int. Cl.: F16L 59/02

(54) **Dispositif de protection thermique rigide et perméable à la pression**
Starre und druckdurchlässige Temperaturschutzvorrichtung
Rigid and pressure permeable thermal protection device

(30) Priorité: 09.02.1990 FR 9001555
(43) Date de publication de la demande: 14.08.1991
(73) Titulaire: AEROSPATIALE Société Nationale Industrielle, 75781 Paris Cédex 16 (FR)
(72) Inventeur: Aurel, Francis Jean, F-33160 Saint Médard en Jalles (FR); Jude, Robert Michel, F-33160 Saint Aubin du Médoc (FR); His, Sylvie Roberte Jacqueline, F-33520 Bruges (FR); Perez, Jacques, F-33110 Le Bouscat (FR)
(74) Mandataire: Phélip, Bruno

(56) Documents cités:
- EP-A- 0 072 281
- EP-A- 0 230 831
- DE-A- 3 327 659
- FR-A- 2 489 812
- FR-A- 2 599 116
- FR-A- 2 625 793
- GB-A- 2 191 115
- US-A- 4 324 167

## Description

L'invention est relative à des dispositifs de protection thermique destinés à des zones devant subir pendant un temps relativement court un flux thermique relativement élevé ainsi qu'une brusque variation de pression selon le préambule de la revendication 1.

L'invention est notamment applicable à la protection thermique d'éléments soumis aux flux thermiques émis par des générateurs de gaz chaud et plus particulièrement à la protection thermique de culot de propulseur de fusée ou de missile. Une telle protection permet de protéger les équipements électriques, mécaniques ou autres situés dans les zones arrières des propulseurs, des flux thermiques émis par les tuyères, lors de la mise à feu et/ou du lancement des missiles ou des fusées et/ou de la séparation de deux de leurs étages.

On sait que de telles tuyères peuvent être fixes ou présenter une déformabilité très faible mais que, pour certaines applications, leurs mouvements peuvent être relativement importants. Une tuyère présente en général une forme sensiblement tronconique. Au repos, la tuyère est dans une position telle que son axe est sensiblement parallèle à l'axe du propulseur. Les mouvements de la tuyère consistent principalement en une inclinaison de son axe par rapport à l'axe du propulseur. La tuyère peut également se déformer légèrement sous l'effet des gaz chauds qui y circulent. L'invention concerne une protection thermique qui est utilisable quelle que soit l'ampleur des déformations ou déplacements de la tuyère.

De nombreux dispositifs de protection thermique sont déjà connus, certains étant destinés plus particulièrement aux éléments placés à l'arrière des propulseurs. Ils peuvent consister en une protection individuelle de chaque élément que l'on souhaite protéger des flux thermiques émanant de la tuyère.

Ainsi, chaque élément de structure, par exemple la jupe ou le fond du propulseur, ainsi que chaque équipement placé dans la zone arrière du propulseur peut être doté d'une coque rigide isolante le protégeant du flux thermique.

Le brevet FR-2 489 812 décrit un procédé de fabrication de pièces en forme capables de supporter des chocs thermiques relativement importants ainsi que des températures élevées, de l'ordre de 1600°C. Ces pièces sont réalisées à partir d'un substrat formé de fibres minérales rigidifiées par au moins un liant minéral et éventuellement un liant organique, le substrat étant réalisé par la technique du moulage par aspiration et l'ensemble ayant subi un traitement de renforcement par une résine. Les pièces en forme obtenues résistent au délaminage et à l'éclatement sous l'effet d'une surpression ou d'une dépression gazeuse et présentent de plus une bonne tenue mécanique et une excellente usinabilité.

Cette technique de protection individuelle de chaque élément de structure et de chaque équipement présente de nombreux inconvénients.

Tout d'abord, elle impose l'utilisation d'une surface et donc d'une masse de matériau de protection thermique très importantes.

De plus, ces coques ou pièces de protection sont fixées mécaniquement ou par collage sur chaque élément de structure ou chaque équipement. Ceci implique que seules les caractéristiques d'isolation thermique des matériaux composant ces coques ou ces pièces sont utilisées. De plus, le collage des éléments de protection thermique sur les équipements entraîne de nombreuses difficultés lors de la maintenance de ceux-ci. En effet, après le démontage des équipements, il faut notamment procéder à la dépose des protections et au décapage des surfaces de collage.

Si la complexité de la réalisation des pièces de protection est fonction de la technique utilisée, il reste qu'un outillage spécifique est nécessaire pour la réalisation de chaque pièce de protection destinée à un élément de structure ou à un équipement particulier. Ainsi, le procédé décrit dans le brevet FR-2 489 812 impose la réalisation préalable, pour chaque pièce de protection particulière, d'un moule d'aspiration destiné à former cette pièce.

On constate enfin que ces techniques de protection thermique individuelle imposent de nombreuses opérations manuelles, notamment des opérations de moulage, de découpe, d'ajustage ou encore de collage. Ces techniques sont donc relativement coûteuses.

On peut aussi envisager une protection thermique permettant de protéger globalement une première zone des flux thermiques émanant d'une deuxième zone, laquelle peut être soumise à des variations brusques et importantes de température et de pression.

Ainsi, le brevet US-4,324,167 décrit un dispositif réalisant, entre l'allumage et le lancement d'une fusée, une étanchéité entre le tube de lancement et l'arrière de la fusée. Ce dispositif protège ainsi le tube de lancement des gaz à haute température générés par la fusée dès son allumage. Cette protection comprend un écran support et une protection flexible superposés, placés à la partie inférieure de la fusée. Lors de l'allumage de la fusée, une pression s'exerce contre la protection flexible, laquelle se déforme pour venir en contact de la fusée et former un joint étanche. Lorsque la fusée décolle, elle rompt le joint, les gaz d'échappement s'échappant de la tuyère provoquant alors la déformation de la protection et l'accroissement du flux de gaz à travers celle-ci.

Cette protection thermique est efficace pour protéger le tube de lancement dans lequel est placé un missile ou une fusée des flux thermiques émis par les tuyères. Cependant, cette protection n'a aucun effet sur les équipements placés dans les zones arrière des propulseurs.

On peut cependant envisager d'isoler thermiquement grâce à un écran thermique, soit toute une zone comportant des équipements, soit une fraction de cette zone correspondant à un équipement particulier sensible au flux thermique.

Une protection thermique globale comporte des avantages. En effet, sa réalisation nécessite moins de moules et d'outillages que la technique de protection thermique individuelle. Elle est donc moins onéreuse que cette dernière. De plus, l'accès aux équipements qu'elle protège est plus aisé et leur maintenance en est facilitée. En particulier, les opérations de décapage des équipements pour oter les résidus de colle et de matière isolante, résultant du collage des pièces de protection thermique individuelle sur les équipements, sont supprimées. Enfin, la surface et donc la masse des matériaux de protection thermique nécessaires à la réalisation d'une telle protection thermique globale sont beaucoup moins importantes que celles entraînées par la réalisation des pièces de protection thermique individuelle qui seraient nécessaires pour protéger les mêmes équipements. On peut constater que le gain de masse est de 25 à 30 %.

La protection thermique globale telle que décrite dans le brevet US-4,324,167 présente cependant des inconvénients. Ainsi, on constate qu'elle est étanche à la pression. Elle engendre en conséquence des efforts importants sur les structures porteuses auxquelles elle est fixée. Ceci impose de renforcer ces structures porteuses et donc entraîne une augmentation de leur masse en réduisant de ce fait les performances de l'engin sur lequel la protection thermique est montée.

On connait des protections thermiques rigides et perméables à la pression. On peut se reporter de nouveau au brevet FR-2 489 812 qui décrit des pièces et matériaux de protection thermiques présentant une porosité relativement importante et qui résistent ainsi à l'éclatement sous les effets de surpressions ou de dépressions gazeuses. Cependant, ces pièces ou matériaux ne présentent pas de bonnes caractéristiques mécaniques et nécessitent des structures porteuses telles que des châssis. Ceci entraîne une augmentation de la masse de la protection thermique réalisée ce qui, comme précédemment, réduit les performances de l'engin sur lequel la protection thermique est montée.

Enfin, de telles protections thermiques sont utilisées pour des tuyères fixes ou présentant une très faible déformabilité, mais ne peuvent l'être pour des tuyères dont les mouvements sont relativement importants.

L'invention a donc pour objet un dispositif de protection thermique d'éléments :
- soumis aux flux thermiques émis par des générateurs de gaz chauds,
- perméable aux surpressions engendrées par l'allumage des générateurs afin de limiter les efforts sur les structures porteuses,
- permettant de résister à des flux thermiques élevés et de s'adapter à des déformations importantes de ces générateurs.

Ce dispositif de protection est plus particulièrement applicable à la protection thermique de culot de propulseur de missile ou de fusée. Il est perméable aux surpressions engendrées par l'allumage de la ou des tuyère(s), résiste à des températures élevées et peut s'adapter à des déformations ou déplacements importants de la ou des tuyère(s).

Selon l'invention, le dispositif comporte les caractéristiques de la revendication 1.

Dans une application du dispositif, la deuxième zone est soumise à la température et à la pression de gaz émanant d'un générateur de gaz relativement chauds et ledit premier élément est constitué par ledit générateur de gaz chauds.

Dans une application plus particulière du dispositif, les zones sont situées à l'arrière du propulseur d'une fusée ou d'un missile, le générateur de gaz chauds est constitué par le propulseur et la tuyère de la fusée ou du missile et le deuxième élément est constitué par la jupe de la fusée ou du missile.

Dans cette application, la première zone est de plus située entre le culot du propulseur et l'écran tandis que la deuxième zone est de plus située entre l'écran et le milieu ambiant.

De façon préférée, les première et deuxième parties sont sensiblement annulaires, la périphérie extérieure de la deuxième partie constituant une zone d'accrochage sur la jupe tandis que la périphérie intérieure de la première partie constitue une zone d'accrochage sur la tuyère.

De préférence, la largeur de ladite première partie est telle que l'espace compris entre la tuyère et la périphérie intérieure de ladite deuxième partie est obturé par ladite première partie quelle que soit la position de la tuyère.

Selon un mode de réalisation du dispositif, au moins une des parties est réalisée en un matériau thermiquement isolant et rigide.

Selon un autre mode de réalisation du dispositif, au moins une partie est constituée d'un matériau isolant thermiquement et d'une structure porteuse.

Selon un premier exemple de matériau isolant thermiquement celui-ci est perméable à la pression.

Selon un deuxième exemple de matériau isolant thermiquement celui-ci est imperméable à la pression.

Selon un exemple de fixation de la structure porteuse de la deuxième partie, cette structure porteuse est supportée par un châssis.

De préférence, le châssis est composé de bras répartis autour de la tuyère et reliés entre eux par l'intermédiaire d'un cadre supérieur et d'un cadre inférieur, le cadre supérieur étant fixé à la jupe tandis que le cadre inférieur supporte la structure porteuse.

Selon un exemple de fixation de la structure porteuse de la première partie, cette structure porteuse est supportée par un anneau fixé à la tuyère.

Selon un premier mode de réalisation de la structure porteuse, celle-ci est constituée par des supports usinés ou moulés.

Selon un deuxième mode de réalisation de la structure porteuse, celle-ci est constituée par un plateau conique en nid d'abeille. Dans ce cas, le plateau comporte de préférence des ouvertures.

L'invention sera mieux comprise et d'autres buts, avantages et caractéristiques de celle-ci apparaîtront plus clairement à la lecture de la description qui suit de modes particuliers de réalisation faite en relation avec les dessins annexés sur lesquels :
- la figure 1 représente une demi-coupe de la zone arrière du propulseur d'une fusée selon l'axe vertical de la fusée,
- la figure 2 représente une vue en plan d'un exemple de structure porteuse pour le dispositif de protection selon l'invention,
- la figure 3 représente une vue partielle en coupe d'un premier exemple de réalisation, selon un plan passant par l'axe de la fusée, du dispositif de protection selon l'invention,
- la figure 4 représente une vue partielle en coupe d'un deuxième exemple de réalisation, selon un plan passant par l'axe de la fusée, du dispositif de protection selon l'invention.

Les éléments communs aux différentes figures seront désignés par les mêmes références.

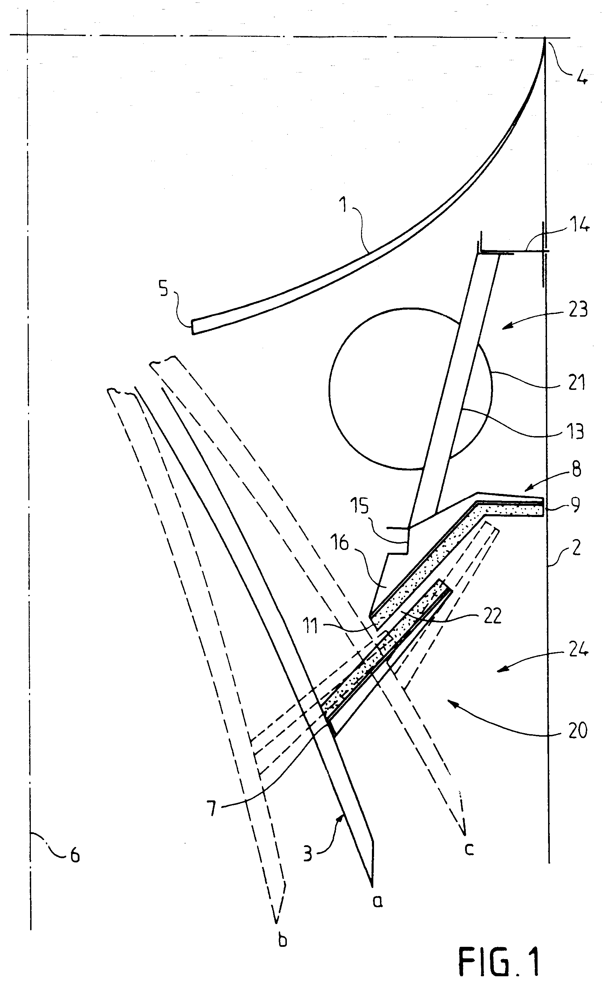

En référence à la figure 1, le culot du propulseur porte la référence 1. Il présente une forme annulaire concave dont la concavité est tournée vers l'intérieur du propulseur. Au niveau de sa périphérie extérieure 4 est fixée l'extrémité supérieure de la jupe 2 qui présente une forme cylindrique. Le culot 1 et la jupe 2 sont des surfaces de révolution ayant pour axe l'axe vertical 6 de la fusée. L'extrémité supérieure de la tuyère 3 est disposée au niveau de la périphérie intérieure 5 du culot 1.

La tuyère 3 présente une forme sensiblement tronconique.

La jupe 2 est fixe, par contre la tuyère est mobile. Ainsi, la figure 1 illustre à titre d'exemple les deux positions extrêmes de la tuyère, référencées a et b.

Dans la position a, représentée en traits pleins, l'axe de la tuyère correspond à l'axe vertical 6 de la fusée. Dans les positions b et c, représentées en pointillés, l'axe de la tuyère fait un angle ± α par rapport à l'axe 6, α étant une valeur déterminée.

Comme on le comprendra par la suite, l'invention est plus particulièrement avantageuse pour des fusées comportant des tuyères mobiles. Elle est cependant tout à fait applicable à des fusées dont les tuyères sont fixes.

On peut noter d'ailleurs que, quelque soit le type de tuyère, sous l'effet des gaz chauds circulant dans la tuyère, celle-ci peut se dilater légèrement.

Entre la tuyère 3 et la jupe 2, sont disposés des équipements électriques ou mécaniques, désignés par la référence 21. En l'absence de tout dispositif de protection, ces équipements sont soumis au flux thermique émis par la tuyère 3, dans laquelle circulent des gaz chauds après l'allumage de la fusée. La température des gaz peut atteindre par exemple 1600°C.

Les équipements ne peuvent subir de telles températures sans dommage.

Le dispositif de protection selon l'invention a donc pour but de s'opposer au flux thermique émis par la tuyère afin de limiter l'élévation de température des équipements et des structures à une valeur acceptable, par exemple comprise entre 70°C et 150°C.

Ce dispositif 20 comprend essentiellement un écran thermique constitué d'une première et d'une deuxième parties 7 et 8 autoporteuses, sensiblement annulaires et non solidaires. La première partie 7 est montée sur la tuyère 3 par l'intermédiaire de sa périphérie intérieure 10 , tandis que la périphérie extérieure 9 de la deuxième partie 8 est supportée par la jupe 2.

La largeur des première et deuxième parties est choisie de telle sorte que l'espace compris entre la tuyère 3 et la périphérie intérieure 11 de la deuxième partie 8 est obturé par la première partie 7 quelle que soit la position de la tuyère 3.

Les deux parties doivent être positionnées de façon à ne pas entrer en contact. De surcroit, la largeur de la première partie 7 est de préférence telle que les première et deuxième parties présentent, dans toutes les positions de la tuyère, une surface en vis-à-vis. Cette réalisation préférentielle est illustrée par la figure 1. Cette zone de recouvrement assure une protection thermique plus efficace car elle crée une chicane 22 qui limite le passage de gaz chauds entre les deux parties. Cette chicane permet donc de protéger de façon plus efficace une première zone 23 de l'arrière du propulseur, située entre le culot 1 du propulseur et le dispositif de protection 20 et comportant les équipements 21 à protéger, d'une deuxième zone 24, située entre le dispositif de protection 20 et le milieu ambiant, et soumise à la température et à la pression des gaz émanant de la tuyère 3.

La position dans laquelle la première partie 7, respectivement la deuxième partie 8 est montée sur la tuyère 3, respectivement sur la jupe 2 est choisie en fonction de l'emplacement des équipements à protéger et de telle sorte que l'épaisseur de la chicane soit la plus faible possible pour limiter au maximum le passage de gaz chauds.

On peut remarquer que, dans l'exemple de réalisation représenté à la figure 1, la position relative des deux parties 7 et 8 est telle que la première partie 7 est la plus éloignée du culot 1 du propulseur.

En référence aux différentes figures, vont maintenant être décrits de façon plus précise des exemples de réalisation du dispositif de protection 20.

Chaque partie du dispositif de protection est réalisée soit seulement en un matériau thermiquement isolant dans le cas où celui-ci est suffisamment rigide, soit en une structure porteuse relativement rigide, recouverte de matériau thermiquement isolant.

On peut citer comme exemple non limitatif de matériau thermiquement isolant et suffisamment rigide pour réaliser des éléments autoporteurs, comme la première ou la deuxième partie 7 ou 8 du dispositif 20, le matériau commercialisé sous la dénomination DURESTOS. Ce matériau est composé de fibres courtes d'amiante et de résine phénolique thermodurcissable. Chaque partie du dispositif peut être réalisée par moulage et compression.

Lorsqu'on utilise un matériau qui n'est pas suffisamment rigide, il faut prévoir une structure porteuse.

La structure porteuse composant la deuxième partie 8 du dispositif de protection peut par exemple être supportée par un châssis 12, composé de plusieurs bras 13 répartis autour de la tuyère reliés entre eux par l'intermédiaire d'un cadre supérieur 14 et d'un cadre inférieur 15, le cadre supérieur 14 étant fixé à la jupe 2 et la structure porteuse 16 étant fixée sur le cadre inférieur 15. Ce châssis 12 est essentiellement prévu pour supporter des équipements, et peut également être utilisé pour fixer la structure porteuse de la deuxième partie 8. Celle-ci peut être fixée à la jupe par tout autre moyen approprié. La structure porteuse qui compose la première partie 7 du dispositif de protection est fixée à la tuyère par l'intermédiaire d'un anneau 25 ou bourrelet disposé sur la tuyère.

La structure porteuse de la première ou de la deuxième partie 7 ou 8 peut être une structure mécanique classique constituée par des supports 16 usinés ou moulés. Grâce au matériau isolant, la température des supports est limitée. Dans la mesure où elle n'excède pas 150°C, toute liberté est laissée dans le choix des matériaux métalliques dans lesquels les supports sont réalisés.

On peut également envisager de réaliser la structure porteuse en un assemblage ayant une âme en nid d'abeille, éventuellement recouverte de tissu par exemple en carbone haut module (HM), pour accroître la rigidité. Cet assemblage présente l'avantage d'être très léger tout en ayant un moment d'inertie très important. Il est notamment commercialisé par l'Aérospatiale sous la marque NIDA.

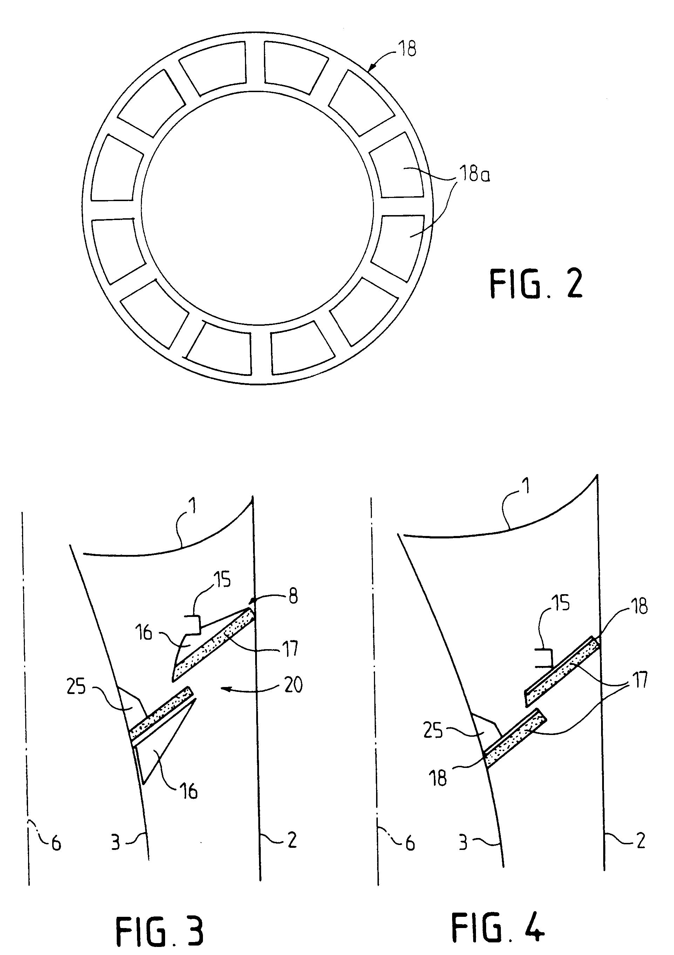

Ainsi, la figure 2 illustre un exemple de structure porteuse réalisée en NIDA. Cette structure est réalisée à partir d'un cône plein en NIDA qui peut être usiné de façon à réaliser des ouvertures 18a. L'intérêt des fenêtres sera détaillé dans la suite de la description. Elle se présente alors sous la forme d'un plateau conique 18 muni d'ouvertures 18a relativement importantes. Ce plateau peut être réalisé en deux parties, à partir de deux demi-cônes, pour faciliter son montage autour de la tuyère 3.

La structure porteuse est recouverte de matériau isolant, de façon différente selon que la structure porteuse est réalisée en métal ou en NIDA.

La figure 3 illustre un exemple de réalisation du dispositif de protection dans lequel la structure porteuse est constituée par des supports usinés ou moulés 16.

Sur cette figure, la seule partie représentée du châssis 12 est le cadre inférieur 15. Sur celui-ci, sont disposés les supports usinés ou moulés 16 composant la structure porteuse de la deuxième partie 8 du dispositif de protection 20. Ils comportent, du côté situé vers le milieu ambiant, une couche de matériau isolant 17. L'ensemble constitué par les supports 16 et le matériau isolant 17 compose la deuxième partie 8 du dispositif de protection.

Comme sur la figure 1, on choisit ici de placer la première partie 7 du dispositif de protection plus loin du culot 1 du propulseur que la deuxième partie 8. La structure porteuse de la première partie 7 est également constituée par des supports usinés ou moulés 16. La référence 25 désigne l'anneau ou bourrelet destiné à l'implantation des organes de liaison entre les supports 16 et la tuyère 3.

De préférence, comme représenté sur la figure 3, pour la première partie 7, c'est la face des supports 16 en regard de la deuxième partie 8 du dispositif de protection qui est recouverte d'un matériau isolant 17, les supports 16 étant alors munis d'une protection thermique individuelle. Cette disposition permet de limiter au maximum la section de passage par la chicane 22 et donc le passage de gaz chauds de la deuxième zone 24 vers la première 23. L'ensemble comprenant les supports usinés 16 et le matériau d'isolation constitue la première partie 7.

La figure 4 illustre un autre exemple de réalisation du dispositif de protection 20, dans lequel la structure porteuse est réalisée en NIDA. Cette figure est semblable à la figure 3 sauf en ce qui concerne la structure porteuse qui est, par exemple, pour chaque partie 7, 8 du dispositif de protection 20, constituée par un plateau conique 18 tel que représenté à la figure 2. De plus, sur la première partie 7, le matériau isolant est de préférence ici placé sur la face opposée à celle en regard de la deuxième partie 8. En effet, la constitution des première et deuxième parties permet ici de ménager une chicane de section de passage minimale quelle que soit la position de la structure porteuse de la première partie 7. De plus, cette disposition permet de protéger la structure porteuse par une couche de matériau isolant sans qu'une protection thermique individuelle soit nécessaire.

Plusieurs types de matériaux isolants peuvent être utilisés pour réaliser le dispositif selon l'invention.

On peut remarquer ici que l'on peut choisir des matériaux perméables ou non à la pression. On comprend que, du fait de la chicane 22, le dispositif de protection selon l'invention est, dans tous les cas, perméable à la pression. Il est cependant intéressant de rendre également les deux parties constituant le dispositif de protection perméables à la pression, afin de réduire les efforts exercés sur les structures porteuses et les éléments qui les supportent (châssis ou anneau).

Les structures porteuses décrites précédemment comportent des évidements : ouvertures 18a dans le plateau 18 pour une structure porteuse réalisée en NIDA ou espaces entre les supports usinés ou moulés 16 pour une structure porteuse mécanique.

Ainsi, si l'on utilise un matériau isolant perméable à la pression, les deux parties 7, 8 composant le dispositif de protection seront perméables à la pression.

On peut citer comme matériau isolant perméable à la pression le matériau obtenu par le procédé décrit dans le brevet FR-2 489 812 déjà cité dans l'introduction de la présente demande et inclus ici à titre de référence.

Ce matériau présente un pourcentage de porosités ouvertes très élevé, de l'ordre de 84 %, et un faible pourcentage de fibres, de l'ordre de 10 %. Il offre une résistance aux brusques variations de pression et une protection thermique tout à fait satisfaisantes.

Il est cependant relativement fragile aux contraintes mécaniques et aux chocs et ne peut donc être utilisé qu'en association avec des structures porteuses.

Le matériau est fabriqué, pour cette application, sous forme de plaques dont l'épaisseur est adaptée aux conditions d'utilisation.

Ces plaques sont, soit collées sur les structures porteuses, soit fixées mécaniquement, il est alors nécessaire de protéger les têtes de fixation.

On peut aussi envisager d'intégrer, au moment de la fabrication du matériau isolant et plus particulièrement au moment de l'aspiration des fibres, un implant en forme de cadre et muni de pattes de fixation permettant de lier la structure porteuse au matériau isolant. On comprend que, dans ce cas, les implants sont liés par adhérence aux fibres du matériau isolant.

L'invention n'est pas limitée à l'utilisation de ce matériau isolant particulier et on peut envisager d'utiliser d'autres matériaux et par exemple celui commercialisé par l'Aérospatiale sous la dénomination Norcoat.

On comprend que lorsque l'on utilise des matériaux isolants étanches à la pression comme le Norcoat, les efforts engendrés sur les structures porteuses et leurs supports sont plus importants que dans le cas de l'utilisation de matériaux perméables à pression. Il est donc nécessaire de mettre en place des renforts supplémentaires, ce qui entraîne une augmentation de la masse et réduit donc les performances de l'engin sur lequel est monté le dispositif de protection thermique.

Enfin, les signes de référence insérés après les caractéristiques techniques énoncées dans les revendications, ont pour seul but de faciliter la compréhension de ces dernières et ne peuvent avoir en aucun cas pour effet de limiter l'invention aux modes particuliers de réalisation qui viennent d'être décrits.

## Revendications

1. Dispositif comprenant une première et une deuxième zones (23,24) situées entre au moins un premier et un deuxième éléments (2,3) sensiblement en vis-à-vis et susceptibles de s'écarter et/ou de se déplacer l'un vis-à-vis de l'autre, la deuxième zone (24) pouvant être soumise à des variations relativement brusques et importantes de température et de pression par rapport à la première (23), et un écran (20) comme protection thermique disposé entre les deux zones (23, 24), caractérisé en que ledit écran présente une forme adaptée à celle des premier et deuxième éléments (2, 3), et est composé d'une première et d'une deuxième parties (7, 8) autoporteuses et non solidaires, chacune desdites parties (8, 7) présentant au moins un point d'accrochage (9, 10) sur l'un respectivement desdits éléments (2,3 ).

2. Dispositif selon la revendication 1, caractérisé en ce que ladite deuxième zone est soumise à la température et à la pression de gaz émanant d'un générateur de gaz relativement chauds.

3. Dispositif selon la revendication 2, caractérisé en ce que ledit premier élément est constitué par ledit générateur de gaz chauds.

4. Dispositif de protection thermique selon l'une des revendications 1 à 3, caractérisé en ce que lesdites zones (23, 24) sont situées à l'arrière du propulseur d'une fusée ou d'un missile.

5. Dispositif de protection thermique selon la revendication 4, caractérisé en ce que ledit générateur de gaz chauds est constitué par le propulseur et la tuyère (3) de la fusée ou du missile.

6. Dispositif de protection thermique selon l'une des revendications 4 ou 5, caractérisé en ce que ledit deuxième élément est constitué par la jupe (2) de la fusée ou du missile.

7. Dispositif de protection thermique selon l'une des revendications 4 à 6, caractérisé en ce que ladite première zone (23) est de plus située entre le culot (1) du propulseur et l'écran (20).

8. Dispositif de protection thermique selon l'une des revendications 4 à 7, Caractérisé en ce que ladite deuxième zone (24) est de plus située entre l'écran (20) et le milieu ambiant.

9. Dispositif de protection thermique selon l'une des revendications 4 à 8, caractérisé en ce que lesdites première et deuxième parties (7, 8)sont sensiblement annulaires, la périphérie extérieure (9) de la deuxième partie (8) constituant une zone d'accrochage sur la jupe (2) tandis que la périphérie intérieure (10) de la première partie (7) constitue une zone d'accrochage sur la tuyère (3).

10. Dispositif de protection thermique selon la revendication 9, caractérisé en ce que la largeur de ladite première partie (7) est telle que l'espace compris entre la tuyère (3) et la périphérie intérieure (11) de ladite deuxième partie (8), est obturé par ladite première partie (7) quelle que soit la position de la tuyère (3).

11. Dispositif de protection thermique selon l'une des revendications 1 à 10, caractérisé en ce qu'au moins une desdites parties est réalisée en un matériau thermiquement isolant et rigide.

12. Dispositif de protection thermique selon l'une des revendications 1 à 11, caractérisé en ce qu'au moins une desdites parties est constituée d'un matériau isolant thermiquement (17) et d'une structure porteuse (16, 18).

13. Dispositif selon la revendication 12, caractérisé en ce que ledit matériau isolant thermiquement est perméable à la pression.

14. Dispositif selon la revendication 12, caractérisé en ce que ledit matériau isolant thermiquement est imperméable à la pression.

15. Dispositif de protection thermique selon l'une des revendications 12 à 14, caractérisé en ce que la structure porteuse de la deuxième partie (8) est supportée par un chassis (12).

16. Dispositif de protection thermique selon la revendication 15, caractérisé en ce que ledit châssis (12) est composé de bras (13) répartis autour de la tuyère (3) et reliés entre eux par l'intermédiaire d'un cadre supérieur (14) et d'un cadre inférieur (15), le cadre supérieur étant fixé à la jupe (2) tandis que le cadre inférieur supporte la structure porteuse.

17. Dispositif de protection thermique selon l'une des revendications 12 à 14 caractérisé en ce que la structure porteuse de la première partie(7) est supportée par un anneau (25) fixé à la tuyère (3).

18. Dispositif selon l'une des revendications 11 à 17, caractérisé en ce que la structure porteuse est constituée par des supports (16) usinés ou moulés.

19. Dispositif selon l'une des revendications 11 à 17, caractérisé en ce que la structure porteuse est constituée par un plateau conique (18) en nid d'abeille.

20. Dispositif selon la revendication 19 , caractérisé en ce que ledit plateau comporte des ouvertures (19).

## Patentansprüche

1. Vorrichtung mit einem ersten und einem zweiten Bereich (23, 24), die zwischen wenigstens einem ersten und zweiten Element (2, 3) angeordnet sind, die einander im wesentlichen gegenüberliegen und sich voneinander entfernen und/ oder gegeneinander versetzt werden können, wobei der zweite Bereich (24) relativ plötzlichen und hohen Temperatur- und Druckänderungen gegenüber dem ersten Bereich (23) ausgesetzt sein kann, und mit einem Schirm (20) als thermischem Schutz, der zwischen den beiden Bereichen (23, 24) angeordnet ist, dadurch gekennzeichnet, daß der Schirm eine Form besitzt, die der des ersten und des zweiten Elementes (2, 3) angepaßt ist, und aus einem ersten und einem zweiten Teil (7, 8) zusammengesetzt ist, die selbsttragend und nicht miteinander verbunden sind, wobei die Teile (8, 7) jeweils wenigstens eine Befestigungsstelle (9, 10) mit den betreffenden Elementen (2, 3) aufweisen.

2. Vorrichtung nach Anspruch 1, dadurch gekennzeichnet, daß der zweite Bereich der Temperatur und dem Druck eines Gases ausgesetzt ist, das von einem Generator eines relativ heißen Gases abgegeben wird.

3. Vorrichtung nach Anspruch 2, dadurch gekennzeichnet, daß das erste Element durch den Generator eines heißen Gases gebildet ist.

4. Thermische Schutzvorrichtung nach einem der Ansprüche 1 bis 3, dadurch gekennzeichnet, daß die Bereiche (23, 24) am hinteren Teil des Triebwerks einer Rakete oder eines Flugkörpers angeordnet sind.

5. Thermische Schutzvorrichtung nach Anspruch 4, dadurch gekennzeichnet, daß der Generator heißen Gases durch das Triebwerk und die Düse (3) der Rakete oder des Flugkörpers gebildet ist.

6. Thermische Schutzvorrichtung nach einem der Ansprüche 4 oder 5, dadurch gekennzeichnet, daß das zweite Element durch den Mantel (2) der Rakete oder des Flugkörpers gebildet ist.

7. Thermische Schutzvorrichtung nach einem der Ansprüche 4 bis 6, dadurch gekennzeichnet, daß der erste Bereich (23) überdies zwischen dem Sockel (1) des Triebwerks und dem Schirm (20) angeordnet ist.

8. Thermische Schutzvorrichtung nach einem der Ansprüche 4 bis 7, dadurch gekennzeichnet, daß der zweite Bereich (24) überdies zwischen dem Schirm (20) und dem Umgebungsbereich angeordnet ist.

9. Thermische Schutzvorrichtung nach einem der Ansprüche 4 bis 8, dadurch gekennzeichnet, daß der erste und der zweite Teil (7, 8) im wesentlichen ringförmig sind, wobei der Außenumfang (9) des zweiten Teils (8) einen Bereich zur Befestigung an dem Mantel (2) bildet, während der Innenumfang (10) des ersten Teils (7) einen Bereich zur Befestigung an der Düse (3) bildet.

10. Thermische Schutzvorrichtung nach Anspruch 9, dadurch gekennzeichnet, daß die Breite des ersten Teils (7) so ist, daß der zwischen der Düse (3) und dem Innenumfang (11) des zweiten Teils (8) vorgesehene Raum durch den ersten Teil (7) verschlossen ist, wie auch immer die Lage der Düse (3) sein mag.

11. Thermische Schutzvorrichtung nach einem der Ansprüche 1 bis 10, dadurch gekennzeichnet, daß wenigstens einer der Teile aus einem thermisch isolierenden und steifen Material verwirklicht ist.

12. Thermische Schutzvorrichtung nach einem der Ansprüche 1 bis 11, dadurch gekennzeichnet, daß wenigstens einer der Teile durch ein thermisch isolierendes Material (17) und einen tragenden Aufbau (16, 18) gebildet ist.

13. Vorrichtung nach Anspruch 12, dadurch gekennzeichnet, daß das thermisch isolierende Material von dem Druck durchdringbar ist.

14. Vorrichtung nach Anspruch 12, dadurch gekennzeichnet, daß das thermisch isolierende Material nicht von dem Druck durchdringbar ist.

15. Thermische Schutzvorrichtung nach einem der Ansprüche 12 bis 14, dadurch gekennzeichnet, daß der tragende Aufbau des zweiten Teils (8) an einem Chassis (12) abgestützt ist.

16. Thermische Schutzvorrichtung nach Anspruch 15, dadurch gekennzeichnet, daß das Chassis (12) aus Armen (13) zusammengesetzt ist, die um die Düse (3) verteilt und untereinander mittels eines oberen Rahmens (14) und eines unteren Rahmens (15) verbunden sind, wobei der obere Rahmen an dem Mantel (2) befestigt ist, während der untere Rahmen den tragenden Aufbau abstützt.

17. Thermische Schutzvorrichtung nach einem der Ansprüche 12 bis 14, dadurch gekennzeichnet, daß der tragende Aufbau des ersten Teils (7) an einem Ring (25) abgestützt ist, der an der Düse (3) befestigt ist.

18. Vorrichtung nach einem der Ansprüche 11 bis 17, dadurch gekennzeichnet, daß der tragende Aufbau durch bearbeitete oder geformte Träger (16) gebildet ist.

19. Vorrichtung nach einem der Ansprüche 11 bis 17, dadurch gekennzeichnet, daß der tragende Aufbau durch eine konische Platte (18) aus einer Wabenform gebildet ist.

20. Vorrichtung nach Anspruch 19, dadurch gekennzeichnet, daß die Platte Öffnungen (19) aufweist.

## Claims

1. Device comprising a first and a second zone (23, 24) situated between at least one first and one second element (2, 3) which are substantially opposite to one another and capable of being moved apart and/or of being displaced in relation to one another, it being possible for the second zone (24) to be subjected to relatively sudden and large variations of temperature and of pressure in relation to the first (23), and a screen (20) as heat protection disposed between the two zones (23, 24), characterized in that said screen exhibits a form which is adapted to that of the first and second elements (2, 3) and is composed of a first and of a second part (7, 8) which are self-supporting and non-integral, each one of said parts (8, 7) exhibiting at least one point of fastening (9, 10) onto one of said elements (2, 3) respectively.

2. Device according to Claim 1, characterized in that said second zone is subjected to the temperature and to the pressure of gases emanating from a generator of relatively hot gases.

3. Device according to Claim 2, characterized in that the said first element is constituted by the said hot gas generator.

4. Heat protection device according to one of Claims 1 to 3, characterized in that the said zones (23, 24) are situated to the rear of the propulsion unit of a rocket or of a missile.

5. Heat protection device according to Claim 4, characterized in that the said hot gas generator is constituted by the propulsion unit and the nozzle (3) of the rocket or of the missile.

6. Heat protection device according to one of Claims 4 or 5, characterized in that the said second element is constituted by the skirt (2) of the rocket or of the missile.

7. Heat protection device according to one of Claims 4 to 6, characterized in that the said first zone (23) is furthermore situated between the case (1) of the propulsion unit and the screen (20).

8. Heat protection device according to one of Claims 4 to 7, characterized in that the said second zone (24) is furthermore situated between the screen (20) and the ambient environment.

9. Heat protection device according to one of Claims 4 to 8, characterized in that the said first and second parts (7, 8) are substantially annular, the external periphery (9) of the second part (8) constituting a zone of fastening onto the skirt (2), while the internal periphery (10) of the first part (7) constitutes a zone of fastening onto the nozzle (3).

10. Heat protection device according to Claim 9, characterized in that the width of the said first part (7) is such that the space included between the nozzle (3) and the internal periphery (11) of the said second part (8) is closed off by said first part (7), irrespective of the position of the nozzle (3).

11. Heat protection device according to one of Claims 1 to 10, characterized in that at least one of the said parts is constructed of a thermally insulating and rigid material.

12. Heat protection device according to one of Claims 1 to 11, characterized in that at least one of the said parts is constituted of a thermally insulating material (17) and of a carrying structure (16, 18).

13. Device according to Claim 12, characterized in that the said thermally insulating material is pressure-permeable.

14. Device according to Claim 12, characterized in that the said thermally insulating material is pressure-impermeable.

15. Heat protection device according to one of Claims 12 to 14, characterized in that the carrying structure of the second part (8) is supported by a frame (12).

16. Heat protection device according to Claim 15, characterized in that the said frame (12) is composed of arms (13) distributed about the nozzle (3) and connected to one another via an upper frame member (14) and a lower frame member (15), the upper frame member being fixed to the skirt (2), while the lower frame member supports the carrying structure.

17. Heat protection device according to one of Claims 12 to 14, characterized in that the carrying structure of the first part (7) is supported by a ring (25) fixed to the nozzle (3).

18. Device according to one of Claims 11 to 17, characterized in that the carrying structure is constituted by machined or molded supports (16).

19. Device according to one of Claims 11 to 17, characterized in that the carrying structure is constituted by a honeycomb conical plate (18).

20. Device according to Claim 19, characterized in that the said plate comprises openings (19).
